# EUROPEAN PATENT SPECIFICATION

(11) **EP 1 797 373 B1**
(45) Date of publication and mention of the grant of the patent: **10.11.2010**
(21) Application number: 05787024.8
(22) Date of filing: 14.09.2005
(51) Int. Cl.: F24J 2/20, B21D 53/04, F24J 2/34, F24J 2/38

(54) **SOLAR COLLECTOR AND METHOD OF ITS MANUFACTURING**
SOLARKOLLEKTOR UND VERFAHREN ZU SEINER HERSTELLUNG
CAPTEUR SOLAIRE ET PROCEDE DE FABRICATION

(30) Priority: 14.09.2004 NL 1027032; 09.12.2004 NL 1027699
(43) Date of publication of application: 20.06.2007
(73) Proprietor: Rayvin Beheer B.V., 4207 NZ Gorinchem (NL)
(72) Inventor: ARONDS, Edwin, NL-4207 NZ Gorinchem (NL)
(74) Representative: Hoeben, Ferdinand Egon
(86) International application number: PCT/NL2005/000669
(87) International publication number: WO 2006/031108

(56) References cited:
- WO-A-01/77590
- CH-A- 624 753
- DE-A1- 2 615 584
- DE-A1- 19 721 657
- US-A- 5 431 149

## Description

The present invention relates to a method for manufacturing a heat exchanger, a solar collector, a system comprising a solar collector

As alternative to the use of fossil fuels, use is increasingly made of for instance solar energy. One application of solar energy is the storage of the energy in a liquid medium.

Such systems are per se known, for instance from the publication of the international patent application of the same inventor as this application, WO 01/77590 Al. This document describes a flat plate collector. This collector already provides a. relatively high efficiency; it is however relatively expensive to manufacture.

The document DE 26 15 584 discloses a solar collector of a plate type that is comprised of 2 plates with in between a channel for through flow of a liquid. This document however does not disclose any turbulence members having the advantages of the present invention. Therefore the present invention improves upon this prior art.

The document CH 624 753 provides channels that have a meandering shape when seen in a side view cross-section. Because of the shape of the channels, the outer surface of the solar collector is not efficient in collecting sunlight as only a small part of this sunlight reaches the surface in a perpendicular manner. The present invention intends to improve upon this by allowing for a substantially flat surface over almost the whole surface.

In order to obviate the above stated drawback and to provide an improved device for heat exchange, the present invention provides a solar collector, comprising:
- a first substantially flat plate for collecting solar energy,
- a second substantially flat plate which is fixed at least substantially along the edges on the underside of the first plate,
- a space between the two plates,
- an inlet for feeding a liquid to the space,
- an outlet for discharging the liquid from the space, whereby the liquid can flow from the inlet to the outlet, wherein the space between the plates is formed in that a profile defining a substantially flat, zigzag form of the space is arranged in at least one of the plates.

An advantage of an embodiment according to the present invention is that the space allowing the fluid to flow through can be realized relatively advantageously by means of arranging the profile in at least one of the plates.

In a first preferred embodiment the turbulence members narrow the space, which has the advantage that the collector can take a flat form and an intensive turbulence is obtained.

In a further embodiment the distance between the plates at the position of the throughflow space is of an order of magnitude as according to claim 3. Such a flat space provides the advantage of a high heat transfer from the plate to the medium such as water. A relatively high throughflow speed is also possible. These aspects provide the option of providing the water with a relatively high final temperature at a relatively low level irradiation, whereby efficiency is optimal.

It is recommended to apply a connection between the plates by means of laser welding. It hereby becomes possible to fix relatively thin steel plates to each other while making use of heat supply to be very specifically applied which, in the case of prior art solar collectors, would warp during manufacture under a large or inadequately controlled heat supply.

This laser welding has particular advantages when plates are used with a thickness below 1 centimetre, preferably with a thickness of 0.1 - 0.9 centimetre, more preferably with a thickness between 0.2 and 0.8 centimetre, more preferably between 0.3 and 0.8 centimetre, more preferably between 0.4 and 0.7 centimetre, and even more preferably 0.4 - 0.6 centimetre.

The plates preferably comprise stainless steel or another durable metal. The use of stainless steel is highly feasible in such a heat exchanger since there is direct contact between the fluid medium and the metal, whereby a very high efficiency can be achieved despite the slightly lower conduction compared to for instance copper.

For fixing purposes the plates are preferably welded to each other. It is also advantageous if the plates are provided with a coating for increasing the absorption capacity of the surface and optionally reducing the emission capacity at operational temperatures.

The above stated method preferably also comprises steps for arranging at least one turbulence member in at least one of the plates for the purpose of causing turbulence in the flow of the fluid. This turbulence assists in spreading the collected heat through the whole fluid volume. It is known of for instance water that the heat conduction is relatively low.

A further aspect of the present invention relates to a solar collector, comprising:
- a first plate for collecting solar energy, a second plate which is fixed at least substantially along the edges on the underside of the first plate,
- a space between the two plates,
- an inlet for feeding a liquid to the space,
- an outlet for discharging the liquid from the space of zigzag form, whereby the liquid can flow from the inlet to the outlet, wherein
- the space between the plates is formed in that a profile defining the zigzag form of the space is arranged in at least one of the plates.

Such a collector has advantages as described in the foregoing. The manufacture thereof is relatively advantageous because a profile is arranged in the metal plate, which profile forms the space for the liquid serving as heat transfer medium. The profile is preferably manufactured by means of deep-drawing or for instance rolling.

In a further embodiment the solar collector comprises turbulence members for causing turbulence in the liquid in the space. An optimal heat distribution is hereby realized in the liquid when the liquid is driven through the zigzag channels. These turbulence members for instance comprise oblique ribs which narrow the throughflow channel by 50 to 90 percent as seen in the direction of flow.

This narrowing makes an effective turbulence possible while the collector can also remain very flat. An advantage hereof is that the complex of housing and collector can be given a flat form. In addition, the manufacture of a flatter collector is efficient because semi-manufactures require little space and a coating can be applied in simple and uniform manner to a flat plate.

In a further preferred embodiment, the solar collector comprises a housing for placing of the plate assembly, comprising:
- a lower wall, comprising a plastic and a framework for supporting the plate assembly and a cover plate, formed integrally,
- an insulation layer which is arranged on the lower wall inside a framework for supporting the plate assembly,
- a cover plate being permeable to radiation and having insulating properties. An advantage of this embodiment is that a maximum efficiency of the solar collector can be realized with a minimum number of components. In addition, this collector can be placed in simple manner at the location where it has to function. Such a solar collector is further simple to assemble and relatively easy to handle and transport in the assembled form.

The solar collector as specified above preferably comprises a mounting profile extending round the periphery of the plate assembly. An advantage of such a profile is that the perhaps slightly rough edge of the plate assembly is shielded relative to the framework within which the plate assembly is placed. With a suitable choice of material such a profile also functions as member for damping vibrations and/or sounds produced by the liquid flow in the plate assembly.

A further aspect of the present embodiment relates to a method for manufacturing a solar collector as according to one or more of the foregoing claims, comprising steps for:
- manufacturing plates for an upper side and an underside of the solar collector,
- arranging a profile comprising edges and ribs in at least one of the plates, which profile, after assembly of the heat exchanger, defines a space on the inside of the heat exchanger, which space has a zigzag form for allowing a fluid to flow therethrough;
- fixing the plates to each other along the ribs and edges by means of laser welding.

According to an embodiment, the profile is arranged in the plate by means of deep-drawing. A profile in a plate can hereby be arranged in a plate in one operation. It is further possible to arrange the profile by means of a roller on which the desired profile is arranged on the surface.

Further advantages, features and details of the present invention will be further described on the basis of a number of embodiments, which will be described with reference to the accompanying figures, in which:
- figure 1 is a top view of a first embodiment according to the present invention;
- figures 2, 3, 4 and 9 show cross-sections of the embodiment of figure 1;
- figure 5 is an exploded view in perspective of a further embodiment comprising the embodiment of figure 1;
- figure 6 is a cross-sectional view of a detail of figure 4;
- figure 7 is a cross-sectional view of a detail of figure 4;
- figure 8 is a cross-sectional view of a detail of figure 9;
- figure 10 is a top view of a further embodiment according to the present invention;
- figure 11 is a perspective view of a detail of figure 10;
- figure 12 shows a cross-section and partial side view of a further embodiment according to the present invention;

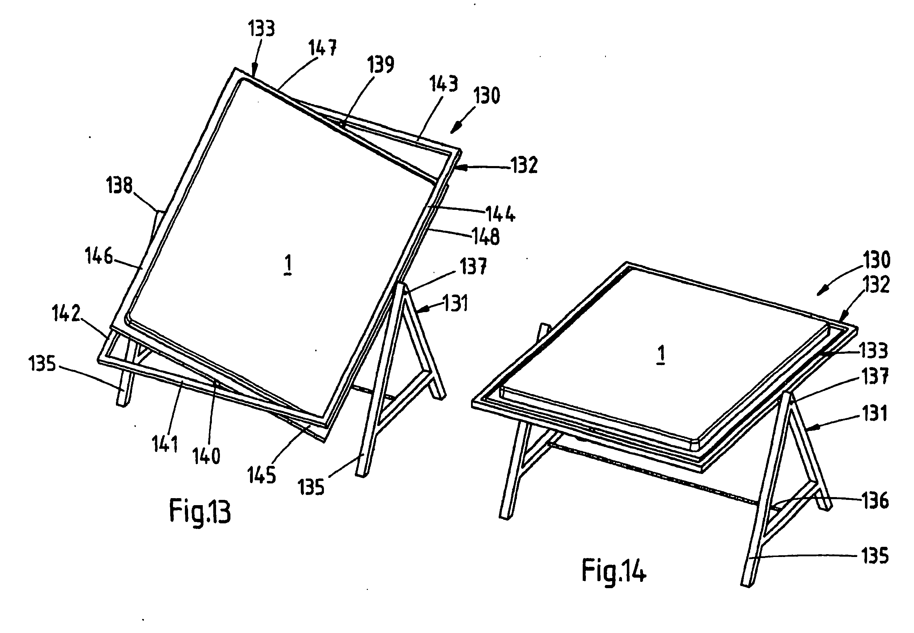

- figure 13 is a perspective view of a further embodiment according to the present invention;
- figure 14 is a perspective view of the embodiment of figure 13;

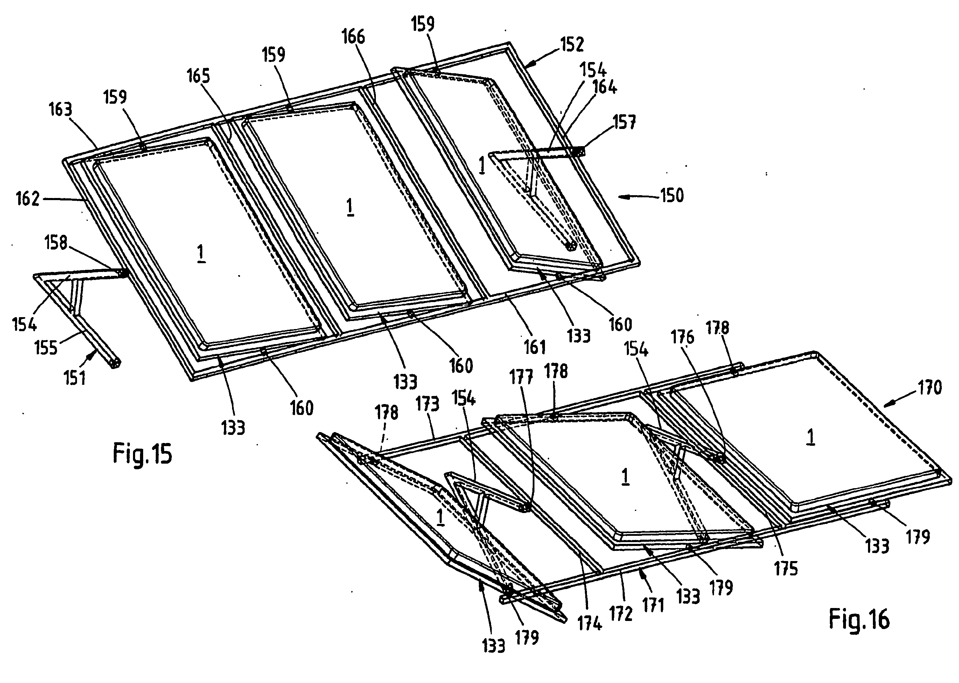

- figure 15 is a perspective view of a further embodiment according to the present invention;
- figure 16 is a perspective view of a further preferred embodiment;

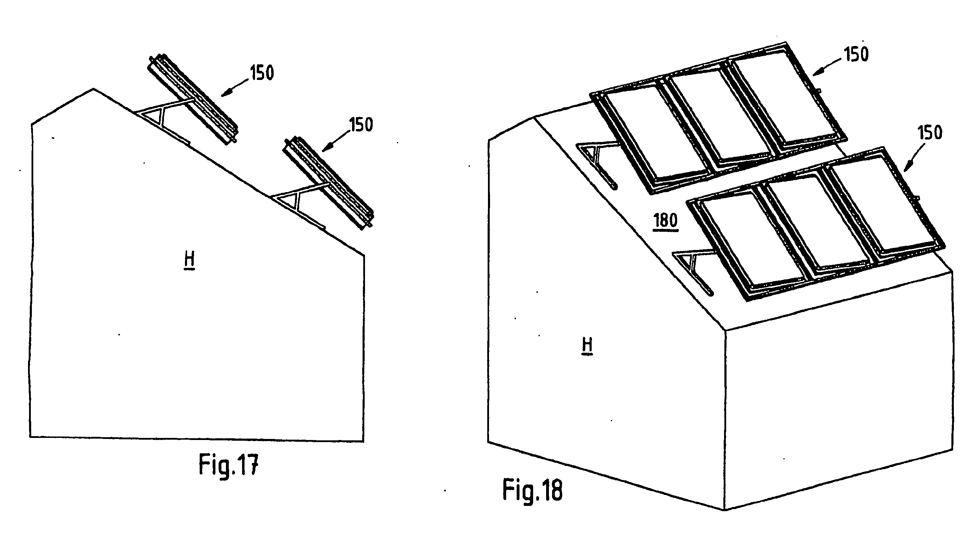

- figure 17 is a side view of the embodiment of figure 15 in an application on a roof;
- figure 18 is a perspective view of the embodiment of figure 15 in a position of use on a roof.

The same reference numerals are used in the figures for components that are optionally interchangeable between embodiments.

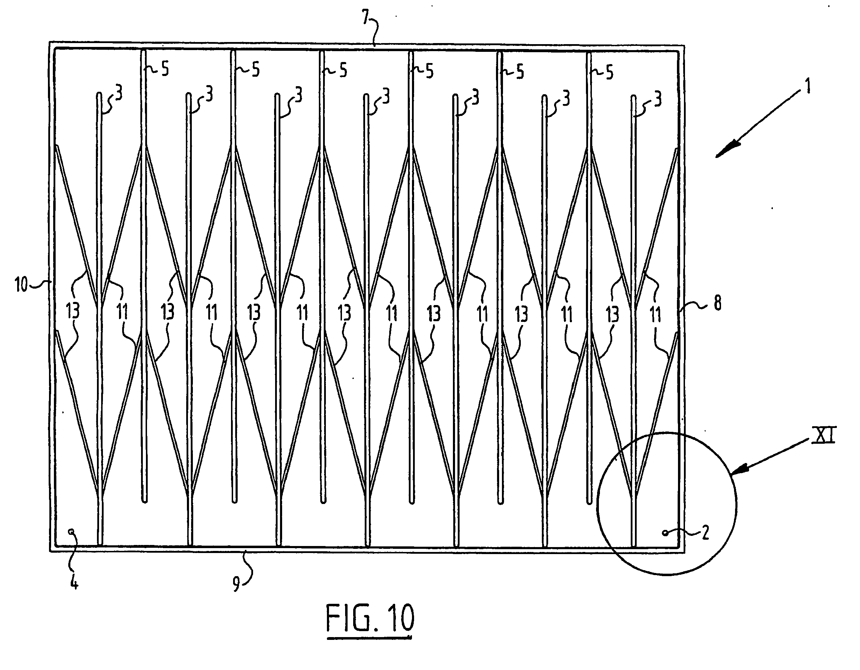

A first embodiment (figure 10) is a flat plate collector 1. This is shown from the top in figure 10. In this embodiment the lower plate (not shown) is flat. A profile of channels and turbulence ribs 11, 13 is arranged in the upper plate. The channels are formed by edges 7, 8, 9, 10 in addition to channel ribs 3, 5. A heat medium such as water flows through the channels designed in a zigzag form. The water enters the collector on the one side at inlet 2 and exits at outlet 4 on the other side of the collector.

The collector preferably has a flow channel thickness of about 1.5-4 millimetres, at which dimensions an optimal efficiency has been found attainable in tests. This efficiency is enhanced in that thin plates of a low thickness are applied. The manufacture of collectors with such specifications is possible according to the present invention by means of laser welding, wherein the laser energy can be applied very precisely and on a very narrow strip. A melting bath of between 0.2 and 0.3 millimetre width is achieved in practice, wherein dissemination of the heat hardly occurs. In addition, this accuracy was also found to be attainable at the most ideal plate thicknesses which were found to be well below 1 millimetre.

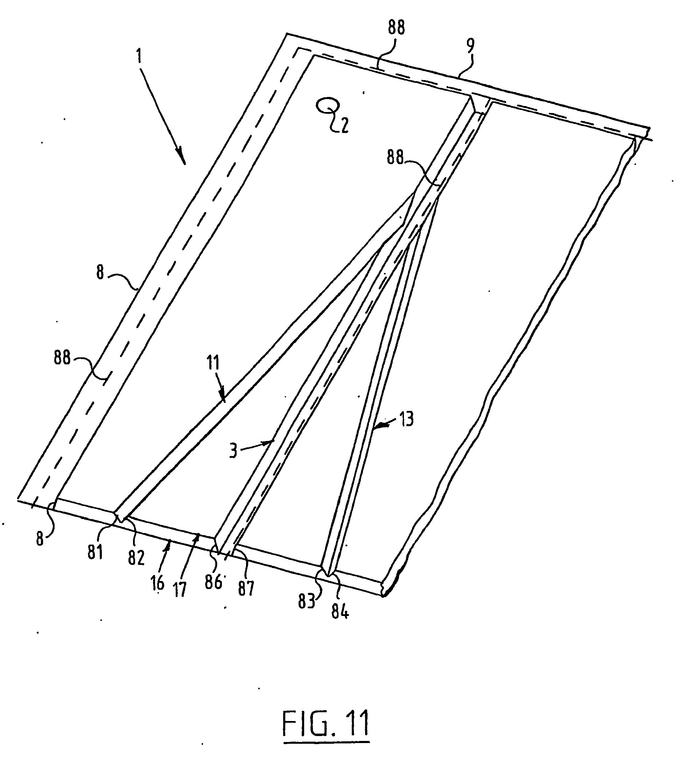

The lower corner close to water inlet 2 is shown in perspective in greater detail in figure 11. The flat plate collector 1 comprises a lower plate 16, which in this embodiment takes a flat form, and an upper plate 17 in which a profile is arranged by means of deep-drawing. In an alternative embodiment both plates are provided with a profile. The two plates are welded to each other along the broken lines 88, for instance by means of laser welding. Situated between the two plates is a space through which the heat transport medium water flows from inlet 2 to outlet 4. The channels are formed by the channel ribs 3 which are bounded by channel walls 86 and 87. The collector is bounded on the side by wall 85.

In order to improve the heat transfer from upper plate 17 to the water, swirling ribs or turbulence ribs 11, 13 are arranged in the upper plate. These extend at an angle from one side of the channel to the other side of the channel. Turbulence rib 11 is formed by two walls 81 and 82 lying in a V-shape relative to one another. Turbulence rib 13 is formed by two walls 83 and 84 lying in a V-shape relative to one another. Turbulence ribs 11 and 13 partly close the throughflow channel in vertical direction, whereby turbulence occurs in the flowing water. Turbulence likewise occurs due to the angle at which the turbulence ribs are arranged in the channels. The height of the ribs and the angle thereof can be varied depending on the use of the collector. More or fewer ribs can likewise be arranged per channel.

The upper side of collector plate 17 can be further provided with a suitable coating to bring about better absorption of the solar radiation. Depending on the amount of solar radiation and ambient temperature at the location of use of the collector, an optimal coating can be applied which for instance optimizes the ratio of the absorption properties and the radiation emission properties.

Plates 16, 17 of stainless steel are particularly suitable for the application in this embodiment. Such a metal provides a very long lifespan and is relatively advantageous. It is also possible to suffice with relatively thin plate material, such as for instance between 0.1 and 1 millimetre. A consequence hereof is that solar collectors can be manufactured with a low weight of between 10 and 20 kilograms per m². A further advantage of the construction of this embodiment is that, when water is used as heat medium, the addition of antifreeze is not necessary.

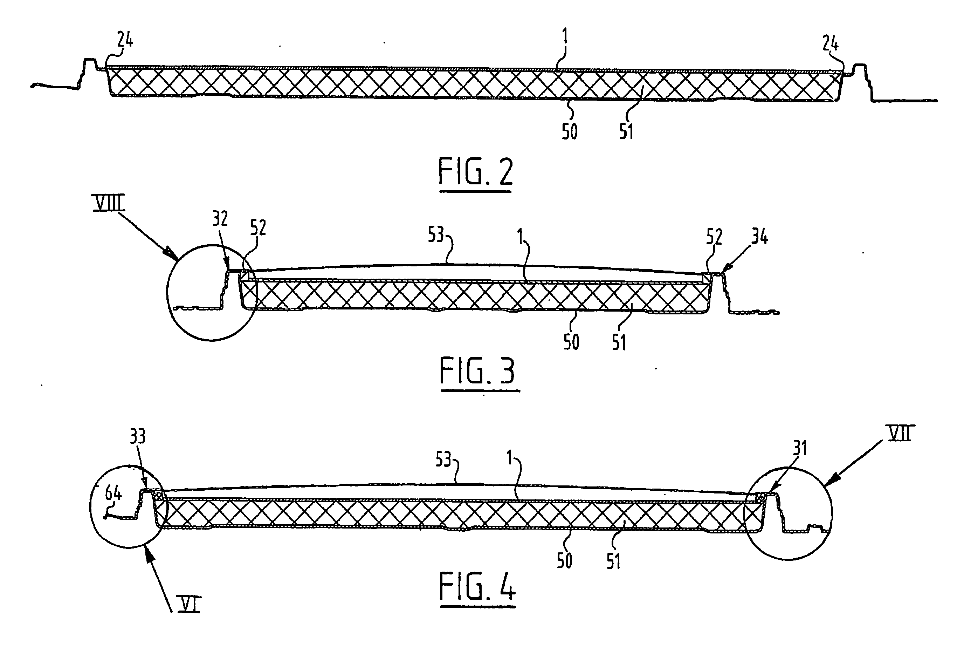

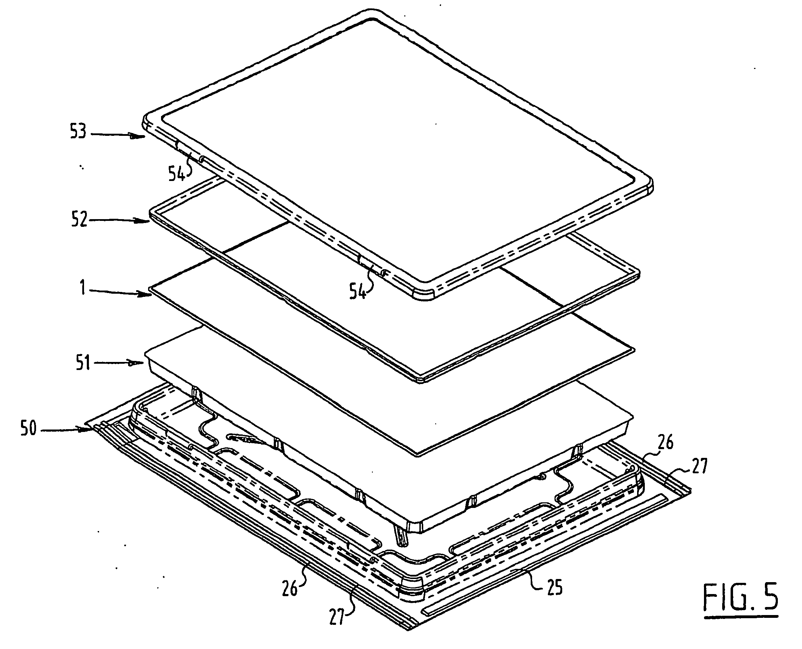

Figure 5 shows in cut-away perspective view an assembly of a mounting plate 50, insulating material 51, collector 1, mounting profile 52 and cover plate 53. Mounting plate 50 is manufactured from a plastic, for instance by means of injection moulding from for instance polyethylene. This plate has a relatively complex profile with a number of advantages. These will be further elucidated hereinbelow with reference to figures 2-9.

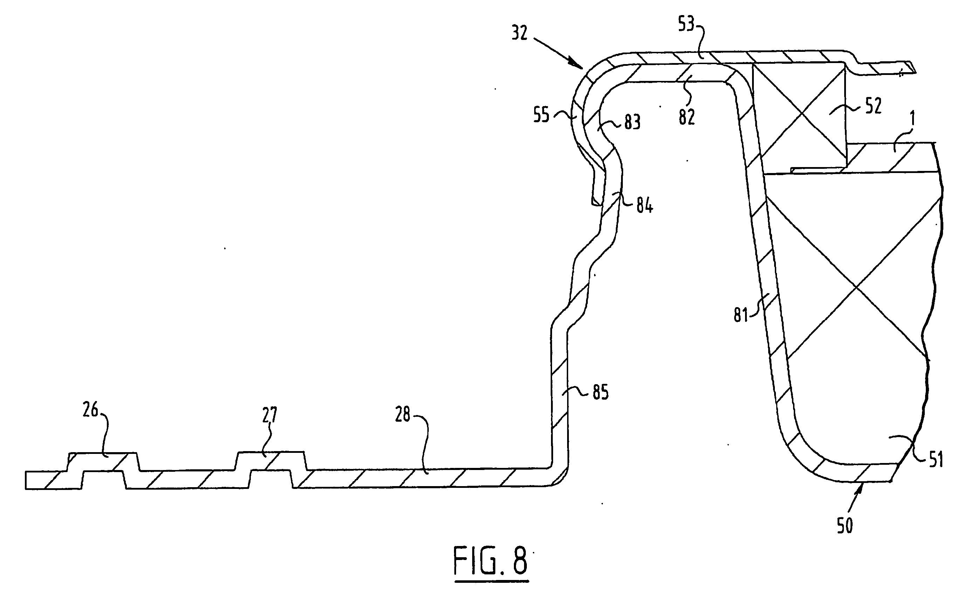

Cover plate 53 is preferably manufactured from perspex. This material has the advantage that it has electrostatic properties, is dirt-repellent and can be cleaned in simple manner by means of water. For fixing purposes the plate is provided with clamping protrusions 54. These are clamped round a bulge (figure 8) of an edge of the mounting plate (figure 8). Alternatively, a (hardened) sheet of glass can be used as cover plate.

Arranged directly onto mounting plate 50 is an insulating plate 51. This latter is situated immediately or some distance below collector 1. Collector 1 is held in position under cover plate 53 by means of a mounting strip. In an embodiment (not shown) there is present in mounting strip 52 a groove in which the edge of collector 1 can be placed. In the shown embodiment the collector is placed on the insulation layer, whereafter the mounting strip is placed on the edge of the collector.

The embodiment of mounting plate 50 is particularly suited for placing on inclining roofs instead of the roof tiles that are present. A recess 28 is provided for this purpose on the underside for supporting on a so-called tiling batten.

Situated on either side of mounting plate 50 are two edges 26, 27 for guiding rainwater. This prevents rainwater flowing away to the sides. On the upper side of mounting plate 50, at least as seen in the amounting position, there is situated a mounting strip or mounting elevation 25.

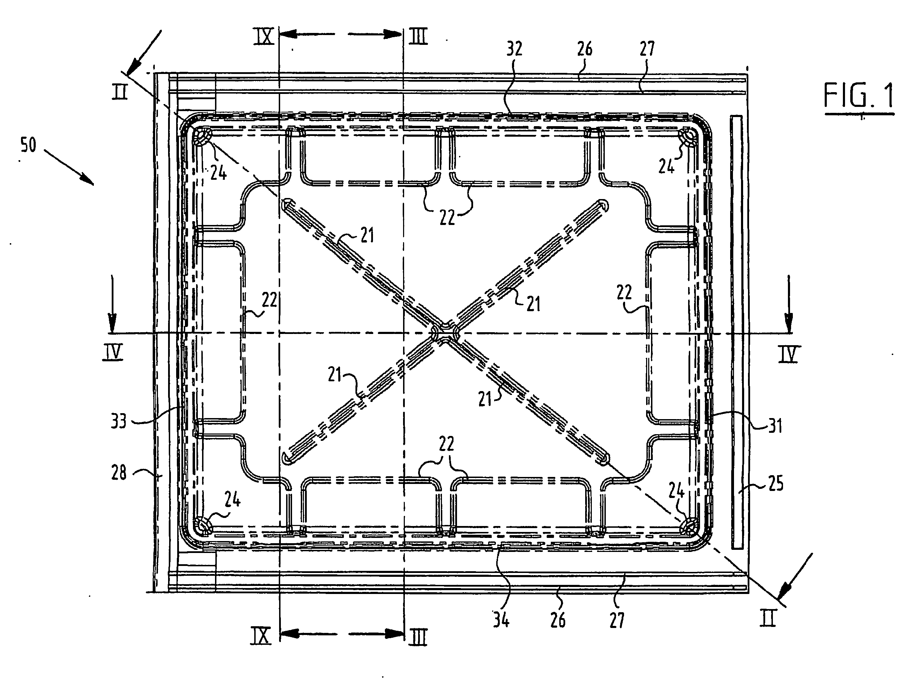

In the view of figure 1 there are indicated a number of sections which are shown in cross-section in the respective figures 2, 3, 4, 9.

Figure 1 further shows strengthening ribs 21 and 22 which are situated in the central area of mounting plate 50. Indicated close to the edges of mounting plate 50 are profile edges 31, 32, 33, 34 which will be shown in detail in the cross-sectional views. Collector plate supports 24 are located on the inner side of the corners of profile edges 31, 32, 33, 34.

Figure 2 shows the section II-II of figure 1 in greater detail. It can be seen that insulating plate 51 is situated between the bottom of mounting plate 50 and collector 1.

Figure 3 shows the section III-III of figure 1 in greater detail. The section VIII of profile edge 32 is shown in greater detail in figure 8. Further shown in the view of figure 3 is profile edge 34 and the insulating plate on mounting plate 50 on which collector 1 is situated. Situated thereabove is cover plate 53. Mounting profile 52 is situated along profile edges 32 and 34 between the collector and the cover plate for the purpose of holding the collector plate positioned under and some distance from cover plate 53.

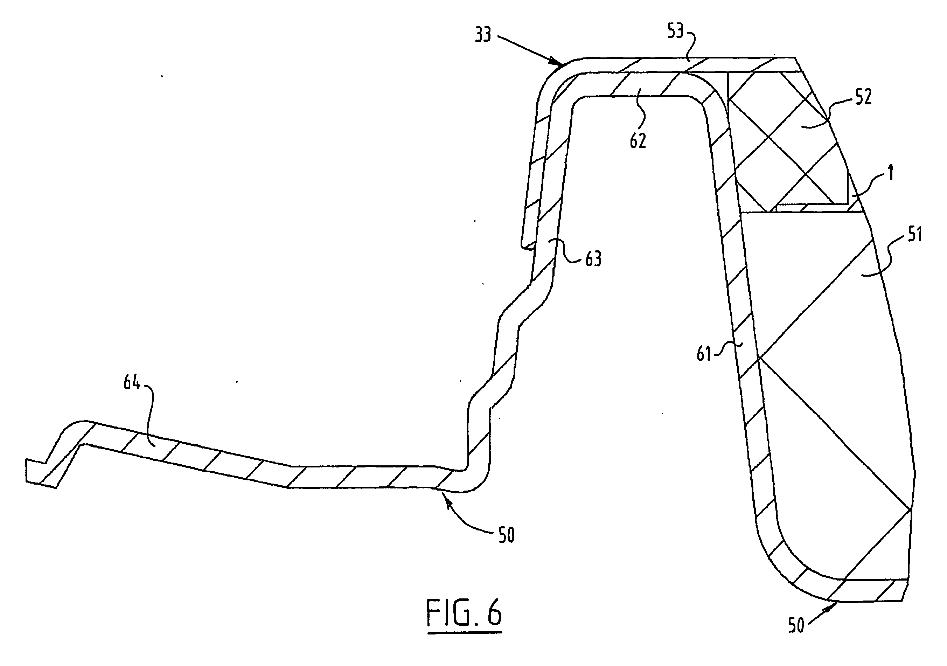

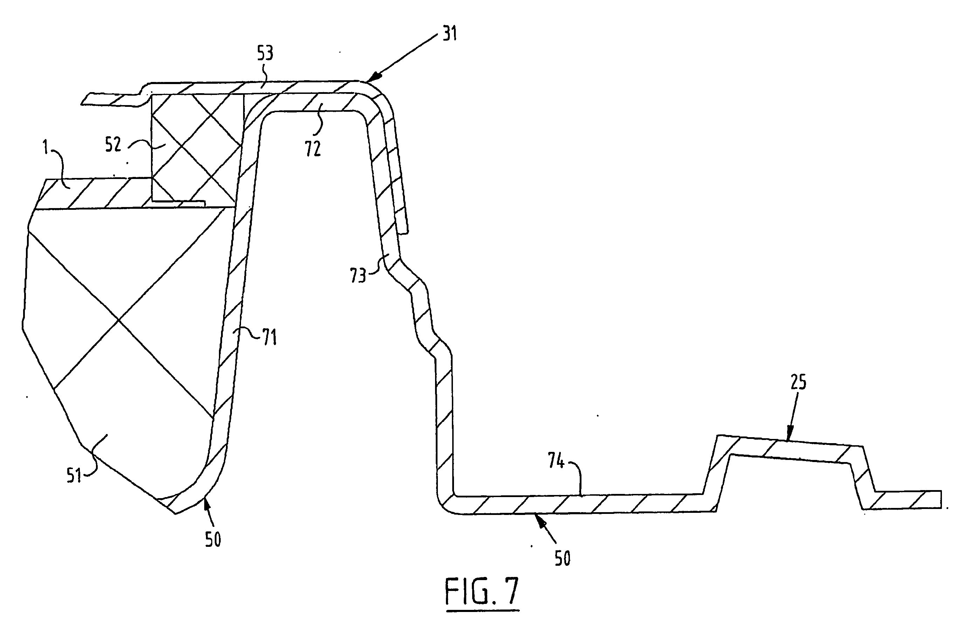

In addition to the components shown in figures 2 and 3, a further cross-section of the assembly is shown in figure 4 along the cross-sectional line IV-IV of figure 1. The cross-section of profile edge 33 and the tiling batten support situated adjacently thereof is shown in greater detail in figure 6. Profile edge 31 and the mounting strip situated adjacently thereof are shown in greater detail in figure 7.

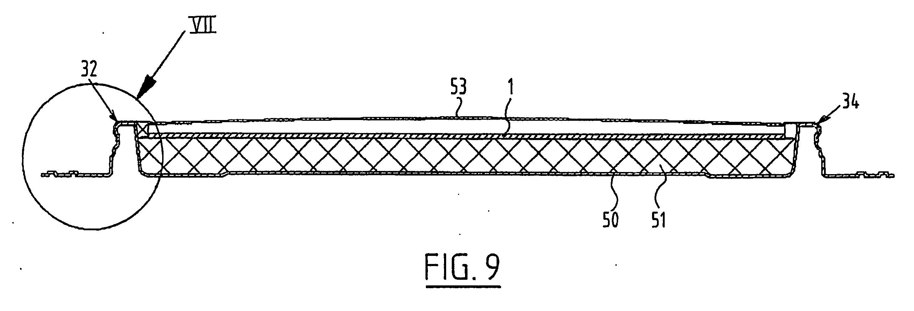

Figure 9 shows profile edge 32, which is shown in greater detail in figure 8. This profile edge 32 comprises at that position a snap protrusion for snap fixing of the cover plate. Profile edge 34 likewise comprises snap protrusions.

Figure 6 shows a cross-section of profile edge 33 in detail. This is located on the underside in the position of assembly of the collector. Profile edge 33 is formed by a wall 61 which runs upward from the bottom of mounting plate 50 and which transposes into the horizontally running wall 62, which then extends in downward direction by means of downward wall 63. On the underside of this downward wall 63 there extends a laterally running wall part 64 which serves as support on a tiling batten. As shown in figure 1, this tiling batten support 64 extends over the whole width of mounting plate 50. It hereby becomes possible to place this tiling batten support on a tiling batten which extends to both sides.

Figure 7 shows in cross-section the upper side of the mounting plate as seen in the position of assembly. Mounting plate 50 extends upward from the bottom thereof by means of wall 71 which transposes into horizontal wall 72 and extends downward therefrom by means of wall 73. From the underside of wall 73 the mounting plate extends by means of horizontal wall 74 which comprises mounting edge 25.

Figure 8 shows in cross-section mounting profile 32 of mounting plate 50 at the position of line IX-IX of figure 1, this detail also being indicated with VIII in figure 9. Mounting plate 50 extends from the bottom thereof in upward direction by means of wall 81. This wall 81 transposes into horizontal upper wall 82 which then extends into arcuate wall 83 which forms the snap protrusion for fixing cover plate 53. This arcuate part 83 transposes into vertical part 84 of profile 32. Via several undulations the wall continues in downward direction to vertical part 85. From vertical wall part 85 the mounting plate extends laterally by means of side flap 28. This side flap 28 is provided with water barriers 26, 27. These water barriers 26, 27 serve to prevent water flowing out to the sides.

Figure 8 further shows clearly the relative positioning of insulation 51, plate assembly 1 and mounting strip 52 under cover plate 53.

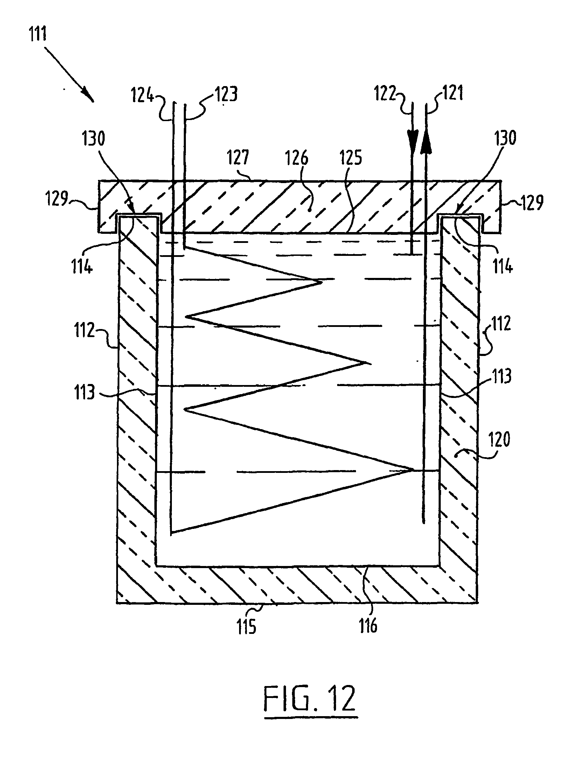

Figure 12 shows a further embodiment according to the present invention. A storage container 111 serves for the storage of water or other appropriate liquid heated by means of the collector plate. Storage container 11 comprises a double-walled, bucket-like vessel and a cover fitting thereon. The vessel is formed by inner wall 113 and outer wall 112, inner bottom 116 and outer bottom 115 and upper wall 114. Such a vessel is manufactured in particularly advantageous manner from a piece of plastic, for instance by means of rotation moulding. By means of an opening (not shown) suitable for the purpose, preferably in outer bottom 115, a foaming insulation material is then introduced which fills the whole space 120 with foam during or after introduction. The cover is manufactured in similar manner. The cover comprises upper wall 127, lower wall 125 and side wall 129. These walls enclose the insulated inner space 126. A very well insulating foaming plastic is preferably also arranged in this inner space. For a good connection onto the vessel, the cover is provided with annular grooves 130 into which the upper part of the hollow wall of the vessel fits. The groove between the vessel and the cover can be further sealed by means of suitable insulating material. One or more annular elements can for instance be applied for this purpose. The water from the solar collector is carried into the storage container by means of a conduit 122, which in this embodiment runs through the cover. The cold water is fed in the direction of the collector by means of conduit 121 which draws off the colder water on the underside of the collector vessel. This conduit 121 is preferably insulated in order to isolate the cold water, during transport thereof to the top of the vessel, from the relatively warm water present there. A heat exchanger 126 is also situated in the vessel. This heat exchanger preferably extends in the relatively warm part of the collector vessel water. This for instance spiral-shaped heat exchanger is connected to the outside world by means of conduits 123 and 124 which in this embodiment run through the cover of the storage container.

It is possible to apply a slightly modified housing for a collector as according to above described embodiments in a sun following system according to any of the latter embodiments. The advantages of these different embodiments are hereby combined, whereby the efficiency can occasionally be further increased.

The present invention is described on the basis of several embodiments, the different aspects of which can be readily varied by the skilled person within the concept of the present invention. The rights sought are defined by the appended claims.

## Claims

1. Solar collector, comprising:
- a first substantially flat plate (17) for collecting solar energy,
- a second substantially flat plate (16) which is fixed at least substantially along the edges on the underside of the first plate,
- a space between the two plates,
- an inlet (2) for feeding a liquid to the space,
- an outlet (4) for discharging the liquid from the space, whereby the liquid can flow from the inlet to the outlet, wherein the space between the plates is formed in that a profile defining a substantially flat, zigzag form of the space is arranged in at least one of the plates, **characterized in that** the solar collector comprises turbulence members (11, 13) for causing turbulence in the liquid in the space, which turbulence members partly close the through flow channel in vertical direction.

2. Solar collector as claimed in claim 1, wherein the distance between the plates is less than 1 centimetre, preferably less than 3/4 centimetre, more preferably less than 2/3 centimetre, more preferably less than ½ centimetre, more preferably less than 1/3 centimetre, and even more preferably less than 1/4 centimetre.

3. Solar collector as claimed in one or more of the foregoing claims 1-2, wherein mutual fixing of the plates is performed by means of laser welding.

4. Solar collector as claimed in one or more of the foregoing claims, wherein steel plate is applied with a thickness below 1 millimetre, preferably with a thickness of 0.1 - 0.9 millimetre, more preferably with a thickness between 0.2 and 0.8 millimetre, more preferably between 0.3 and 0.8 millimetre, more preferably between 0.4 and 0.7 millimetre, and even more preferably 0.4 - 0.6 millimetre.

5. Solar collector as claimed in one or more of the foregoing claims, comprising a housing for placing of the plate assembly, comprising:
- a lower wall (50), comprising a plastic and a framework for supporting the plate assembly and a cover plate, formed integrally,
- an insulation layer (51) which is arranged on the lower wall inside a framework for supporting the plate assembly,
- a cover plate (53) being permeable to radiation and having insulating properties.

6. Solar collector as claimed in claim 5, comprising a mounting profile (62) extending round the periphery of the plate assembly.

7. solar collector as claimed in claim 5 or 6,
wherein the cover plate is a slightly curved plastic plate.

8. Method for manufacturing a solar collector as claimed in one or more of the foregoing claims, comprising steps for:
- manufacturing plates for an upper side and an underside of the solar collector,
- arranging a profile comprising edges and ribs in at least one of the plates, which profile, after assembly of the heat exchanger, defines a space on the inside of the heat exchanger, which space has a zigzag form for allowing a fluid to flow therethrough;
- fixing the plates to each other along the ribs and edges by means of laser welding.

9. Method as claimed in claim 8, wherein the plates preferably comprise stainless steel or another durable metal.

10. Solar collector as claimed in claim 5, 6 or 7 in which the lower wall and the cover plate are attachable by means of a clamping mechanism (52).

11. Solar collector as claimed in claim 10 comprising bulges and clamping protrusions for clamping over the bulges.

12. Solar collector as claimed in any of the preceding claims, comprising edges for guiding away rainwater.

## Patentansprüche

1. Solarkollektor, umfassend:
- Einen ersten wesentlichen flachen Platte (17) für Sammeln von Solarenergie,
- Einen zweiten wesentlichen flachen Platte (16), die zumindest im Wesentlichen entlang der Kanten an der Unterseite der ersten Platte fixiert,
- Ein Raum zwischen den beiden Platten,
- Einen Einlass (2) zum Zuführen eines flüssigen in den Raum,
- Eine Auslass (4) zum Abführen der Flüssigkeit aus dem Raum, wobei die Flüssigkeit vom Einlass zum Auslass fließen kann, wobei der Raum zwischen den Platten ist, dass ein Profil in einem im wesentlichen ebenen, Zick-Zack-Form des Raumes definieren angeordnet ist gebildet in mindestens eine der Platten, in die Solarkollektoren Turbulenzen Mitglieder (11, 13) für die Entstehung von Turbulenzen in der Flüssigkeit in den Raum, die Turbulenzen durch die Mitglieder teilweise Strömungskanal in vertikaler Richtung schließen, **dadurch gekennzeichnet**.

2. Solarkollektor nach Anspruch 1, **dadurch gekennzeichnet, dass** der Abstand zwischen den Platten kleiner ist als 1 Zentimeter, vorzugsweise kleiner als 4/3 Zentimeter, mehr bevorzugt kleiner als 2/3 Zentimeter, mehr bevorzugt kleiner als 1/2 Zentimeter, mehr bevorzugt weniger als 1/3 Zentimeter, und noch mehr bevorzugt weniger als 1/4 Zentimeter.

3. Solarkollektor nach einem oder mehreren der vorhergehenden Ansprüche 1-2, wobei die gegenseitige Fixierung der Platten erfolgt mittels Laserschweißen.

4. Solarkollektor nach einem oder mehreren der vorstehenden Ansprüche, wobei Stahlplatte mit einer Dicke von weniger als 1 Millimeter aufgebracht, vorzugsweise mit einer Dicke von 0,1 bis 0,9 Millimeter, besonders bevorzugt mit einer Dicke zwischen 0,2 und 0,8 Millimeter, besonders bevorzugt zwischen 0,3 und 0,8 Millimeter, besonders bevorzugt zwischen 0,4 und 0,7 Millimeter, und noch mehr bevorzugt von 0,4 bis 0,6 Millimeter.

5. Solarkollektor nach einem oder mehreren der vorhergehenden Ansprüche, umfassend ein Gehäuse für die Platzierung der Platte, umfassend:
- Eine untere Wand (50), umfassend einem Kunststoff und einen Rahmen für die Unterstützung der Tafel Montage und eine Abdeckplatte, einstückig geformt,
- Eine Isolationsschicht (51), die auf der unteren Wand innerhalb eines Rahmens zur Unterstützung der Montage der Platte angeordnet ist,
- Einer Abdeckplatte (53) durchlässig für Strahlung und mit isolierenden Eigenschaften.

6. Solarkollektor nach Anspruch 5, umfassend einen Montagen Profil (62) dass sich erstreckt Rundum der Peripherie der Platten.

7. Solarkollektor nach Anspruch 5 oder 6, wobei die Abdeckplatte eine leicht gebogene Kunststoffplatte ist.

8. Verfahren zur Herstellung einer Solaranlage in einem oder mehreren der vorstehenden Ansprüche, com-Schritte für September gewinnen:
- Herstellung von Platten für eine Oberseite und eine Unterseite des Kollektors,
- Vorbereitung eines Profils mit Kanten und Rippen in mindestens eine der Platten, welches Profils, nach der Montage des Wärmetauschers, einen Raum im Inneren des Wärmetauschers definiert, wobei der Raum eine Zick-Zack-Form hat dafür dass sich eine Flüssigkeit **dadurch** fließen lässt;
- Befestigung der Platten zueinander entlang der Rippen und Kanten mittels Laserschweißen.

9. Verfahren nach Anspruch 8, wobei die Platten vorzugsweise aus rostfreiem Stahl oder einem anderen dauerhaften Metall.

10. Solarkollektor nach Anspruch 5, 6 oder 7, in denen die untere Wand und die Abdeckplatte mittels eines Spannmechanismus (52) zu koppeln sind.

11. Solarkollektor nach Anspruch 10 mit Ausbuchtungen und Klemmung Vorsprünge zum Spannen über den Ausbuchtungen.

12. Solarkollektor nach einem der vorhergehenden Ansprüche, umfassend Kanten zur wegführen von Regenwasser.

## Revendications

1. Capteur solaire, comprenant:
- Une première plaque sensiblement plane (17) pour recueillir l'énergie solaire,
- Une seconde plaque sensiblement plane (16) qui est fixé au moins sensiblement le long des bords sur la face inférieure de la première plaque,
- Un espace entre les deux plaques,
- Une entrée (2) pour l'alimentation liquide à l'espace,
- Une sortie (4) pour décharger le liquide de l'espace, par lequel le liquide peut couler de l'entrée à la sortie, où l'espace entre les plaques est formé dans un profil que la définition d'une substantiellement plate, forme en zigzag de l'espace est aménagé dans au moins une des plaques, **caractérisé en ce que** le capteur solaire est composé de membres de turbulence (11, 13) pour causant de la turbulence dans le liquide dans l'espace, que les membres de turbulence en partie grâce à fermer le canal d'écoulement dans le sens vertical.

2. Capteur solaire selon la revendication 1, dans lequel la distance entre les plaques est inférieure à 1 centimètre, de préférence inférieure à 3/4 cm, de préférence moins de 2/3 cm, de préférence moins de 1/2 centimètres, de préférence moins de 1/3 centimètre, et encore plus préférentiellement moins de 1/4 centimètre.

3. Capteur selon une ou plusieurs des revendications précédentes 1-2, **caractérisé en** commun de fixation des plaques est réalisée au moyen du soudage laser.

4. Capteur solaire selon une ou plusieurs des revendications précédentes, plaque en acier dans lequel est appliqué avec une épaisseur inférieure à 1 millimètre, de préférence avec une épaisseur de 0,1 à 0,9 millimètre, de préférence avec une épaisseur comprise entre 0,2 et 0,8 millimètre, de préférence entre 0,3 et 0,8 millimètre, de préférence entre 0,4 et 0,7 millimètre, et encore plus préférentiellement de 0,4 à 0,6 millimètre.

5. Capteur solaire selon une ou plusieurs des revendications précédentes, comprenant un boîtier de la mise de l'ensemble de la plaque, comprenant:
- Une paroi inférieure (50), comprenant une plastique et un cadre de soutien de l'Assemblée plaque et une plaque de couverture, formée intégralement,
- Une couche isolante (51) qui est disposé sur la paroi inférieure à l'intérieur d'un cadre pour soutenir l'ensemble de la plaque,
- Une plaque de couverture (53) étant perméable aux rayonnements et ayant des propriétés isolantes.

6. Capteur solaire selon la revendication 5, comprenant un profil de fixation (62) s'étendant autour de la périphérie de l'ensemble de la plaque.

7. Capteur solaire selon la revendication 5 ou 6, dans lequel la plaque est une plaque légèrement incurvée en plastique.

8. Procédé de fabrication d'un capteur solaire selon une ou plusieurs des revendications précédentes, comprenant des mesures pour:
- fabrication des plaques pour une face supérieure et une face inférieure du capteur solaire,
- Preparation d'un profil avec le bord et les côtes au moins une des plaques, qui, après avoir monté le profil de l'échangeur de chaleur définit un espace intérieur de l'échangeur de chaleur, dont l'espace a une forme en zigzag pour permettre à faire un fluide à écoulement;
- La fixation des plaques les unes aux autres le long des côtes et les bords par soudage au laser.

9. Méthode selon la revendication 8, où les plaques comportent de préférence en acier inoxydable ou autre métal durable.

10. Capteur solaire selon la revendication 5, 6 ou 7, dans laquelle la paroi inférieure et la plaque de recouvrement peuvent être fixés au moyen d'un mécanisme de serrage (52).

11. Capteur solaire selon la revendication 10, comprenant des gonflements et des saillies de serrage pour le serrage sur les bosses.

12. Capteur solaire selon l'une quelconque des revendications précédentes, comprenant les bords de guidage eaux de pluie.
